Europäisches Patentamt

(19) European Patent Office

Office européen des brevets

(11) Numéro de publication : **0 307 317 B1**

⑫ ∴ **FASCICULE DE BREVET EUROPEEN**

(45) Date de publication du fascicule du brevet :
**17.04.91 Bulletin 91/16**

(51) Int. Cl.⁵ : **B60J 1/00, B60J 1/02, B60J 1/10, B60J 1/18**

(21) Numéro de dépôt : **88402266.6**

(22) Date de dépôt : **08.09.88**

(30) Priorité : **10.09.87 DE 3730345**

(43) Date de publication de la demande :
**15.03.89 Bulletin 89/11**

(45) Mention de la délivrance du brevet :
**17.04.91 Bulletin 91/16**

(84) Etats contractants désignés :
**AT BE CH DE ES FR GB GR IT LI LU NL SE**

(56) Documents cités :
**DE-A- 3 435 365**

(54) Fenêtre de véhicule.

(72) Inventeur : **Kunert, Heinz**
**23 Am Krielerdom**
**W-5000 Köln 41 (DE)**

(74) Mandataire : **de Toytot, Robert et al**
**SAINT-GOBAIN RECHERCHE 39 quai Lucien Lefranc**
**F-93300 Aubervilliers (FR)**

(73) Titulaire : **SAINT GOBAIN VITRAGE INTERNATIONAL**
**"Les Miroirs" 18, avenue d'Alsace**
**F-92400 Courbevoie (FR)**
**BE CH ES FR GB GR IT LI LU NL SE AT**
Titulaire : **VEGLA Vereinigte Glaswerke GmbH**
**Viktoriaallee 3-5**
**W-5100 Aachen (DE)**
**DE**

## Description

L'invention concerne une fenêtre de véhicule comportant d'une part une tôle métallique de maintien périphérique parallèle au vitrage à laquelle le vitrage est collé à l'aide d'un cordon de colle et d'autre part un vitrage équipé soit d'un cadre en plastique soit d'un profilé plastique collé à sa périphérie, le cadre ou le profilé étant pourvu d'au moins une aile perpendiculaire à la surface du vitrage (voir par exemple EP-A-0121481).

La technique de montage des vitrages automobiles qui consiste à coller sans intermédiaire le vitrage à la tôle de maintien de la baie est souvent appelée "collage direct".

Les vitrages automobiles destinés au collage direct sont généralement équipés sur leur surface dirigée vers la tôle de maintien d'un dépôt opaque à la lumière et aux rayons ultraviolets en forme de cadre qui est en général constitué d'une peinture à chaud ou d'un émail. Ce dépôt sert d'une part à protéger le cordon de colle de l'action des rayons ultraviolets et évite d'autre part qu'il ne soit visible de l'extérieur, au travers du vitrage.

Par ailleurs, on utilise également pour le collage direct, des vitrages automobiles qui possèdent à la place du dépôt en forme de cadre ou en plus de celui-ci, un cadre en matière plastique ou un profilé également en plastique placés à l'avance à la périphérie du vitrage. Pour le collage direct on connaît également des vitrages équipés à leur périphérie d'un cadre en matière plastique ou d'un profilé en plastique possédant une aile dirigée vers la tôle de maintien et perpendiculaire à la surface du vitrage (voir par exemple EP-A-0 121 481 B). Cette aile est toujours située à la limite du cadre ou du profilé vers l'intérieur du parebrise et elle sert ainsi à limiter le débordement latéral de la masse adhésive lors de la pose du vitrage équipé de son cordon de colle.

Avec le collage direct, il est nécessaire que les vitrages soient positionnés précisément par rapport à la feuillure de la baie de la carrosserie. Il faut en effet que l'espace restant entre le bord du vitrage et le bord de la feuillure ait une largeur constante. L'exigence minimale imposée oblige à avoir une rainure horizontale supérieure qui ait une largeur donnée constante. En effet, dans beaucoup de cas, le bord inférieur du vitrage aussi bien du parebrise que de la lunette arrière est caché par des éléments de carrosserie et seule, la rainure supérieure est visible. Dans le collage direct il faut maintenir mécaniquement le vitrage dans la baie jusqu'à ce que le cordon de colle soit suffisamment dur pour ne plus se déformer sous l'effet du poids du vitrage. S'il en était autrement, le vitrage se déplacerait sous l'effet de son poids et la rainure supérieure horizontale sortirait des tolérances acceptables.

Pour fixer temporairement le vitrage pendant le temps de prise de la colle, plusieurs méthodes sont connues : on peut par exemple coller à la périphérie du vitrage des éclisses faites d'un métal qui se déforment plastiquement. Après collage du vitrage, ces éclisses sont rabattues dans la feuillure (EP-A-0 148 797 A). Cette méthode nécessite un positionnement précis du vitrage dans la feuillure et exige par ailleurs un travail manuel conséquent pour replier toutes les éclisses à la fin de l'opération.

L'invention se donne pour mission de trouver une solution économe en main d'oeuvre pour positionner et fixer un vitrage automobile destiné au collage direct. Cette solution doit garantir au minimum que la rainure horizontale supérieure et/ou inférieure entre le bord du vitrage et le bord de la feuillure ait une largeur définie et que le vitrage soit immobilisé dans la position correspondante.

Selon l'invention, on réalise cette mission en positionnant l'aile du cadre ou du profilé le long du bord supérieur et/ou inférieur du vitrage, à une distance constante donnée du bord de la feuillure de la baie et en la dotant d'une surface d'appui destinée à supporter la composante du poids du vitrage dirigée dans le plan de la baie, ladite surface d'appui, coopérant avec l'élément d'appui de la tôle de maintien supérieure et/ou inférieure dirigé sensiblement perpendiculairement au plan de la baie de manière à constituer un assemblage.

Conformément à l'invention, on a donné au profilé lié rigidement au bord du vitrage une forme en aile connue en soi, et d'une part, des dimensions spécifiques ainsi qu'une section de forme déterminée telles qu'il puisse à lui seul exercer la fonction d'appui et qu'aucun élément accessoire ne soit nécessaire. D'un autre côté, l'aile de ce profilé ne se positionne pas par rapport au bord du vitrage mais au contraire, délibérément, en référence à la feuillure de la baie qui lui fait face par rapport à laquelle il reste à une distance déterminée. On voit qu'ainsi, à la différence des méthodes connues, ce profilé équipé de son aile permet de positionner le vitrage par rapport à la partie horizontale supérieure et/ou inférieure de la baie. De plus, selon l'invention, la feuillure joue directement ou indirectement le rôle d'appui pour l'aile du profilé. On réalise ainsi un dispositif qui permet de positionner et de fixer le vitrage de manière particulièrement simple et efficace et en employant une main d'oeuvre minimale.

Dans son mode de réalisation le plus simple, le vitrage n'est équipé du profilé pourvu de son aile permettant le positionnement et la fixation du vitrage que le long de son bord supérieur ou inférieur. Après le dépôt du cordon de colle au bord du vitrage ou sur la feuillure de la baie on suspend pour ainsi dire le vitrage dans la baie, c'est-à-dire que c'est d'abord l'aile du profilé qui vient en contact avec la surface d'appui de la feuillure. Dans un deuxième temps, le vitrage s'ajuste symétriquement dans la baie, c'est-à-dire qu'il est déplacé latéralement jusqu'à ce que les deux rainures périphériques aient la même largeur. Dans une dernière phase c'est le vitrage sur toute sa périphérie qui est appliqué sur la tôle de maintien. La composante du poids du vitrage qui agit en appliquant celui-ci sur la tôle de maintien est généralement suffisante, étant donnée l'inclinaison usuelle des vitrages, pour permettre à celui-ci d'exercer une pression suffisante de manière à écraser le cordon de colle sur la tôle de maintien.

Dans un développement de l'invention, le profilé équipé de son aile est placé également le long des bords latéraux du vitrage, les sections latérales du profilé servent ici à ajuster automatiquement latéralement la position du vitrage. Dans ce dernier cas, les ailes du profilé sont dimensionnées et placées de telle sorte qu'elles puissent s'appuyer sur une partie de feuillure perpendiculaire à la tôle de maintien par exemple à la périphérie de la feuillure. Ici, l'aile latérale du profilé doit être disposée de telle manière qu'elle puisse s'appuyer dans la feuillure sans aucun jeu. De préférence, les ailes latérales du profilé sont douées d'une élasticité telle que lorsque le vitrage est posé dans la baie, elles puissent se déformer élastiquement latéralement.

Dans une autre variante avantageuse de l'invention, on peut en plus du réglage dans le plan du vitrage, effectuer un réglage dans la direction perpendiculaire. Ceci est particulièrement intéressant lorsqu'on cherche à obtenir pour des raisons d'aérodynamisme du véhicule une continuité entre le vitrage et la surface de la carrosserie qui l'entoure. Pour permettre un réglage en profondeur automatique, le profilé périphérique est équipé de cales ou d'encoches qui viendront, lors du montage, coopérer avec des encoches ou des cales complémentaires placées sur la tôle de maintien pour créer une continuité entre le vitrage et la carrosserie. De manière évidente il faut avoir placé ces cales ou ces encoches par rapport à la partie de carrosserie qui entoure la baie de telle manière qu'au moment de l'assemblage des cales dans les encoches on obtienne de par la conception même de l'ensemble une continuité entre les surfaces externes du vitrage et la carrosserie.

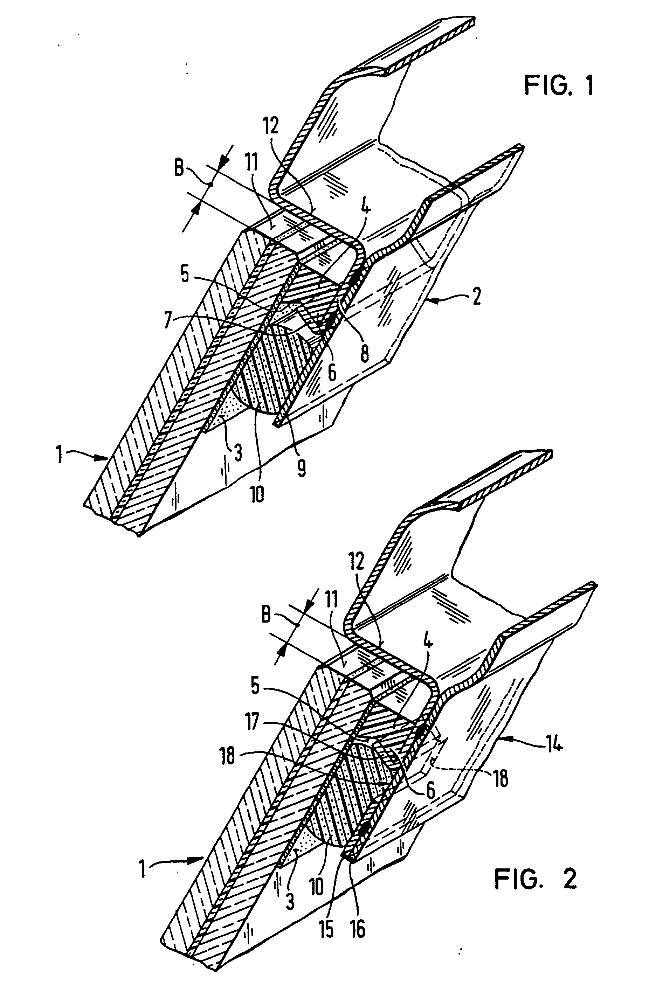

Les figures 1 à 8 présentent une série d'exemples de réalisation d'une baie conforme à l'invention. On présente dans chaque cas une coupe du vitrage et de son environnement dans la partie supérieure ou inférieure de la périphérie horizontale de la baie.

Dans tous les cas présentés, il s'agit de vitrages équipés par collage sur leur surface interne c'est-à-dire sur la surface opposée à la tôle de maintien, d'un profilé en matière plastique. Il peut s'agir d'une profilé préformé qui est collé tel quel sur la surface du vitrage tel qu'il est décrit par exemple dans la demande de brevet DE-A-35 36 806. Une manière particulièrement avantageuse consiste à créer le profilé simultanément à son dépôt en l'extrudant à l'aide d'une buse avec une section adaptée, directement sur la surface du vitrage. Dans ce cas, la matière est une masse adhésive qui durcit. Cette technique d'extrusion et les masses adhésives correspondantes sont connues. Les matériaux les plus adaptés à une telle extrusion sont les prépolymères de polyuréthane unicomposants sous forme pâteuse. En effet, le durcissement s'effectue sous l'action de l'humidité de l'air et engendre des élastomères à haut module. On trouve de tels systèmes de polyuréthanes décrits dans le brevet US-A-3 779 794. De même des systèmes de polyuréthanes à deux composants peuvent convenir, ainsi, ceux présentés dans la demande de brevet européen EP-A-00 83 797 ou dans le brevet européen EP-A-00 24 501 sont adaptés. Selon la nature de la masse adhésive on doit préparer la surface sur laquelle le cordon profilé sera déposé de manière connue, éventuellement avec un primaire d'adhérence adapté.

Pour créer le profilé sur le vitrage on peut par exemple utiliser une tête d'extrusion que l'on conduit le long du bord du vitrage à une distance définie. Ceci peut être obtenu à l'aide d'un dispositif mécanique qui maintient la distance au chant du vitrage constante. La conduite de la tête d'extrusion le long de la périphérie du vitrage peut cependant être effectuée à l'aide d'un robot programmé en conséquence ou d'une autre machine programmable sans qu'on ait besoin de se placer directement en référence par rapport au chant du vitrage. Cette dernière méthode présente l'avantage que le dépôt du profilé sur le vitrage est indépendant du bord de celui-ci et que par conséquent il peut ne dépendre que de la forme et des dimensions de la baie et de sa conception propre. C'est ainsi par exemple que la distance entre le profilé et le bord supérieur horizontal du vitrage peut être différent de ce qu'elle est sur les bords latéraux.

Sur les dessins, on a fait figurer un vitrage feuilleté tel qu'on l'utilise en général dans les parebrises d'automobile. Il est bien évident qu'on pourrait utiliser à la place de celui-ci un vitrage monolithique ou même un vitrage constitué d'une autre combinaison verre/plastique.

La figure 1 montre un premier mode de réalisation d'une fenêtre de véhicule selon l'invention. Le vitrage 1 est équipé le long de sa bordure sur la face vis-à-vis de la tôle de maintien 2 d'un dépôt 3 opaque en forme de cadre. Ce dépôt 3 est constitué d'un émail à chaud.

Le long du chant supérieur on a placé par extrusion d'une masse adhésive un profilé 4 sur le dépôt 3 qui y adhère fortement. La section du profilé 4 est approximativement rectangulaire. Sur son bord inférieur 5, le profilé 4 possède une excroissance 6. Derrière cette excroissance 6 se trouve le retour 7 de la tôle 8. Ce retour constitue avec l'autre tôle 9 le bord de la baie 2 de la fenêtre. La conception de la surface inférieure 5 du profilé et l'inclinaison du retour 7 de la tôle entraînent au moment du positionnement du vitrage 1 la création d'une force en direction de la tôle de maintien. Dans les autres régions de la périphérie du vitrage existe également une composante des forces dirigées vers la tôle de maintien. Cette composante résulte du poids du vitrage lui-même. Ces composantes suffisent pour que, lorsqu'on positionne le vitrage 1 une pression suffisante s'exerce sur le cordon de colle 10. Le profilé 4 et le retour de tôle 7 sont placés de telle manière par rapport à la tôle de maintien 2 d'une part et au vitrage 1 d'autre part que la rainure qui subsiste entre la périphérie 11 du vitrage 1 et le bord 12 de la feuillure de la baie ait sur tout la largeur du vitrage la même largeur B.

Le mode de réalisation présenté figure 2 consiste en un profilé 4 placé sur le vitrage 1 et que possède sensiblement la même forme et la même section que dans le mode de réalisation de la figure 1. La tôle de maintien 14 est constituée de deux tôles unitaires 15 et 16 qui sont droites. Ici la surface d'appui pour le profilé 4 est constituée par la tôle 17 qui est obtenue par estampage de la tôle 15 sur trois côtés puis par pliage. L'ouverture 18 ainsi constituée dans la section de la tôle 15 est fermée et rendue étanche par la pénétration de la masse adhésive 10.

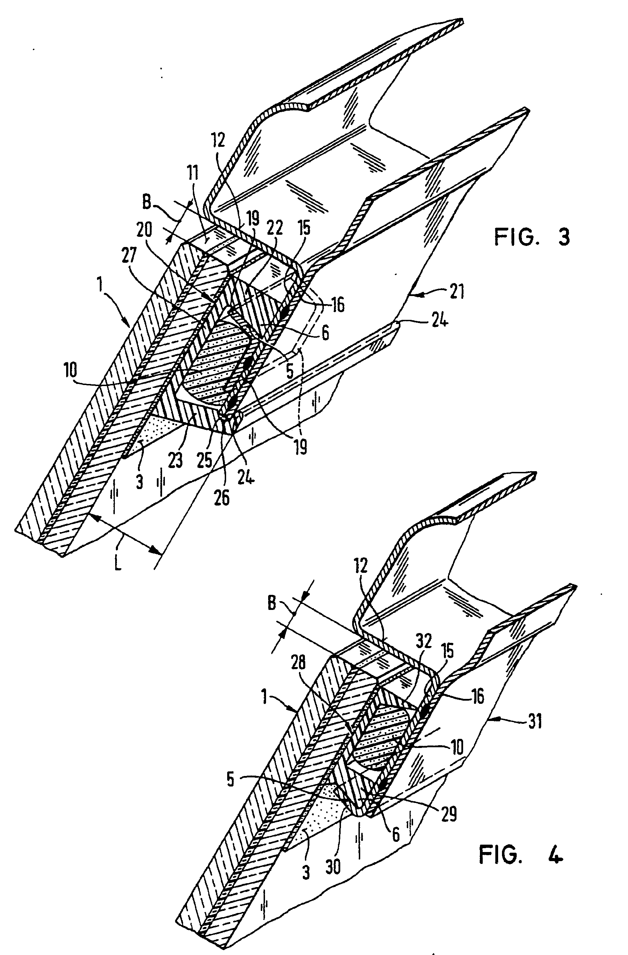

La figure 3 présente un mode de réalisation dans lequel le vitrage 1 est équipé d'un profilé 20 qui par son interaction avec la tôle de maintien 21 permet un positionnement et une fixation du vitrage 1 dans les trois dimensions. Le profilé 20 a approximativement la forme d'un U constitué d'une partie centrale 27, d'une première aile 22, externe, et d'une aile interne, 23. L'aile externe 22 a la même forme et remplit la même fonction que le profilé 4 des exemples de réalisation précédemment décrits. Il coopère tout le long du bord supérieur du vitrage avec l'élément de tôle 19 qui a la forme d'un crochet. Ici cette tôle 19 en forme de crochet est indépendante, elle est fixée sur la tôle de maintien 21 par soudage ponctuel. L'aile intérieure 23 du profilé 20 a une longueur L qui est supérieure à la distance entre la surface du verre et la tôle de maintien 21. Sa partie terminale 24 s'accroche à la tôle de maintien 21. Sur sa face intérieure l'aile 23 est équipée d'une gorge 25. C'est dans cette gorge que le bord 26 de la tôle de maintien 21 viendra se fixer. Grâce à l'aile interne 23 on obtient un centrage symétrique du vitrage. Les ailes 23 agissent comme des ressorts élastiques, elles se déforment donc élastiquement lors de l'introduction du vitrage de telle sorte que la tôle 26 s'introduise dans la gorge 25.

Le mode de réalisation présenté figure 4 présente également un profilé 28 dont la section est sensiblement en forme de U. Mais cette fois-ci le poids du vitrage 1 coopère par l'intermédiaire de l'aile interne 29 du profilé c'est-à-dire l'aile inférieure avec l'extrémité recourbée 30 de la tôle de maintien 21. A la place de la tôle 30 recourbée on pourrait également ici utiliser des éléments d'appui en forme de crochet qui seraient alors fixés à la tôle d'appui 31. Le profilé 28 possède vers l'extérieur une aile 32 qui est approximativement perpendiculaire à la surface du vitrage. Cette aile 32 qui a approximativement une section triangulaire joue le rôle d'appui pour la masse adhésive 10.

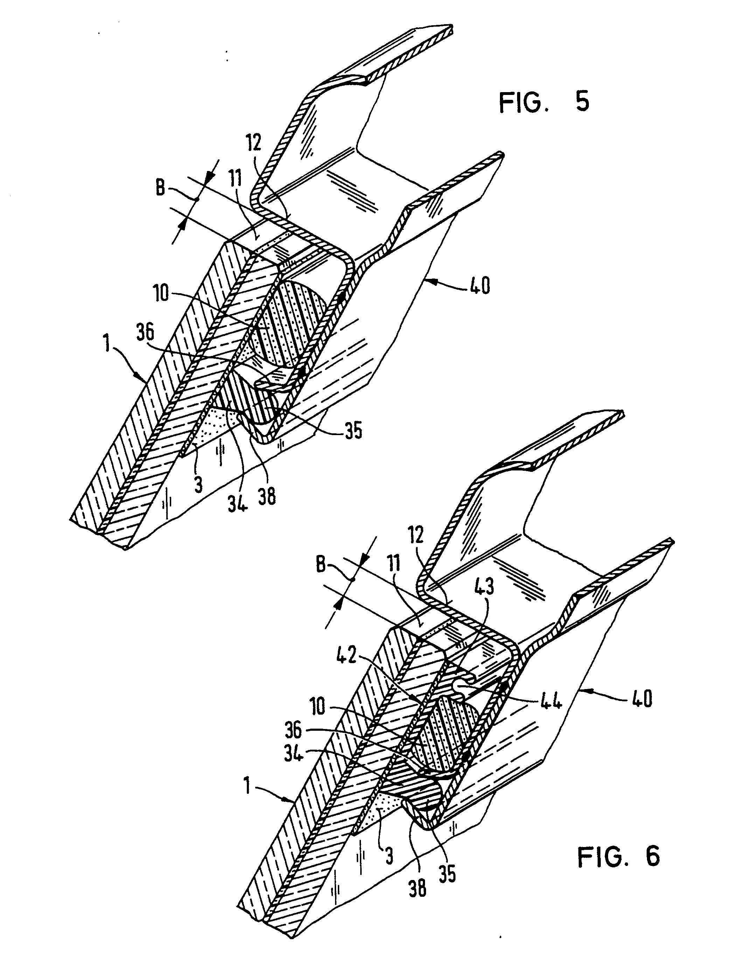

La figure 5 représente un mode de réalisation dans lequel le vitrage 1 est équipé dans une configuration bien définie d'un profilé 34. Le profilé 34 se termine par un renfort 35 qui est maintenu dans un canal. Ce dernier est constitué par les extrémités courbées 36 et 38 de la tôle de maintien 40. On obtient ainsi un clipage du vitrage sur la tôle de maintien 40 le long d'une portion définie de la périphérie ou même éventuellement sur tout son pourtour. Le cordon de colle 10 assume après prise de la colle un collage définitif et durable du vitrage.

Le mode de réalisation présenté figure 6 montre le dispositif pour le positionnement et la fixation du vitrage 1 réalisé d'une manière voisine de celle des exemples précédents. Ici, de nouveau, l'aile 34 comporte un renfort 35 qui coopère avec un canal constitué par déformation des extrémités 36 et 38 de la tôle de maintien 40. L'aile 34 est ici la partie interne d'un profilé 42 qui possède une section en U. L'aile extérieure 43 comporte une gorge 44 dans laquelle une cordelette à forte résistance à la traction peut être introduite. En cas de besoin, celle-ci peut servir au cisaillement du cordon de colle 10 et de l'aile 34 du profilé. L'utilisation de telle cordelette est connue et facilite le démontage éventuel du vitrage.

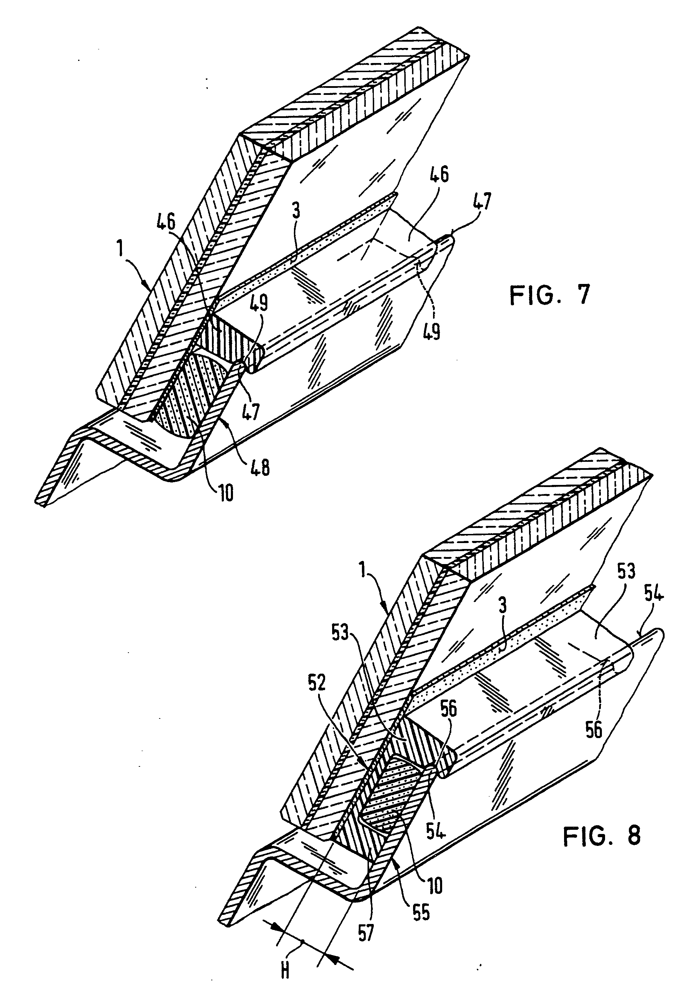

La figure 7 montre en coupe un exemple de réalisation dans la partie basse d'une baie. Ici le profilé 46, placé le long du bord inférieur du vitrage 1, sert d'appui rigide lié au vitrage. Il s'appuiera sur le bord supérieur 47 de la tôle de maintien 48. Le profilé 46 est ici aussi équipé sur sa face inférieure d'une gorge 49 dans laquelle le bord supérieur 47 de la tôle de maintien 48 vient s'engager. L'immobilisation réalisée par le profilé 46 dure au moins aussi longtemps qu'il est nécessaire pour obtenir le durcissement du cordon de colle 10.

La figure 8 présente un exemple de réalisation dans lequel le profilé 52 placé sur le vitrage 1 réalise son positionnement dans les trois dimensions lorsqu'il est disposé sur toute sa périphérie. L'aile interne 53 s'appuie de nouveau le long du bord 54 de la tôle de maintien 55, le bord 54, s'insérant alors dans la gorge 56. De cette manière on obtient un positionnement précis du vitrage dans son plan. L'aile extérieure 57 possède une hauteur H qui correspond à la distance souhaitée entre le vitrage et la tôle de maintien 55. Sa fonction consiste à jouer le rôle de butée lors de la pose du vitrage dans la baie. On presse alors sur le cordon de colle 10 par l'intermédiaire du vitrage dans la direction de la tôle de maintien 55 jusqu'à la limite constituée par l'aile en question. On obtient ainsi un positionnement précis du vitrage dans la direction perpendiculaire à sa surface.

## Revendications

1. Fenêtre de véhicule comportant une tôle métallique de maintien (21, 31, 40, 55) périphérique parallèle au vitrage (2) à laquelle le vitrage (1) est collé à l'aide d'un cordon de colle (10) et d'autre part un vitrage équipé soit d'un cadre en plastique soit d'un profilé plastique (4, 20, 28, 34, 46, 52) collé à sa périphérie, le cadre ou le profilé étant pourvu d'au moins une aile (4 ; 22 ; 29 ; 34 ; 46 ; 53) perpendiculaire à la surface du vitrage, caractérisée en ce que l'aile (4 ; 22 ; 29 ; 34 ; 46 ; 53) du cadre ou du profilé est placée le long du bord supérieur et/ou inférieur du vitrage, à une distance constante donnée du bord (12) de la feuillure de la baie et en ce qu'elle est dotée d'une surface d'appui destinée à supporter la composante du poids du vitrage (1) dirigée dans le plan de la baie, ladite surface d'appui, coopérant avec l'élément d'appui (7 ; 17 ; 30 ; 38 ; 47 ; 54) de la tôle de maintien supérieure et/ou inférieure, (2 ; 14 ; 21 ; 31 ; 40) dirigé sensiblement perpendiculairement au plan de la baie de manière à constituer un assemblage.

2. Fenêtre de véhicule selon la revendication 1, caractérisée en ce que l'aile (46 ; 53) dirigée perpendiculairement à la surface du vitrage est placée le long du bord inférieur de celui-ci et en ce que l'élément d'appui pour l'aile (46 ; 53) est l'extrémité supérieure (47 ; 54) de la tôle de maintien (48 ; 55).

3. Fenêtre de véhicule selon la revendication 1, caractérisée en ce que l'aile (4 ; 29 ; 34) dirigée perpendiculairement à la surface du vitrage est placée le long de son bord supérieur et que l'élément d'appui pour l'aile (4 ; 29 ; 34) est fait par la déformation de l'extrémité (7 ; 30 ; 38) de la tôle de maintien (2 ; 31 ; 40) orientée dans la direction du vitrage (1).

4. Fenêtre de véhicule selon la revendication 1 caractérisée en ce que les éléments d'appui pour l'aile (4 ; 22) dirigés perpendiculairement à la surface du vitrage ont une forme de crochet (17) et sont fixés aux tôles de maintien (14 ; 21).

5. Fenêtre de véhicule selon l'une des revendication 1 à 4, caractérisée en ce que l'aile (22) dirigée perpendiculairement à la surface du vitrage constitue l'un des éléments d'un profilé (20) qui comporte par ailleurs une aile (23) sensiblement perpendiculaire à la surface du vitrage dont la position sur le vitrage et la longueur (L) sont définies de telle sorte qu'elle s'appuie, éventuellement par déformation élastique, sur le bord (26) de la tôle de maintien (21).

6. Fenêtre de véhicule selon la revendication 5, caractérisée en ce que la surface de l'aile (23) qui coopère avec le bord (26) de la tôle de maintien (21) comporte une gorge (25).

7. Fenêtre de véhicule selon la revendication 2 ou la revendication 3, caractérisée en ce que la tôle de maintien (40) est constituée de deux tôles unitaires juxtaposées dont les extrémités (36 ; 38), déformées en direction du vitrage (1) constituent ainsi un canal qui coopère avec le renfort (35) de l'aile (34) dirigée perpendiculairement au vitrage pour former un assemblage mécanique.

8. Fenêtre de véhicule selon l'une ou plusieurs des revendications 1 à 7, caractérisé en ce que le profilé (42) qui comporte une aile (34) sensiblement perpendiculaire à la surface du vitrage possède en outre une seconde aile (43) équipée d'une gorge (44) destinée à recevoir une cordelette à forte résistance à la traction.

9. Fenêtre de véhicule selon l'une ou plusieurs des revendications 1 à 8, caractérisé en ce que l'aile (4 ; 34 ; 46) ou le profilé (20 ; 28 ; 42 ; 52) comportant une aile (22 ; 29 ; 34 ; 53) sont obtenus par extrusion d'une masse adhésive visqueuse directement sur la surface du verre, la tête d'extrusion étant conduite sur le vitrage conformément à une programme qui dépend des dimensions géométriques de la baie de la carrosserie.

## Ansprüche

1. Fahrzeugfenster mit einem metallischen, parallel zur Glasscheibe (1) angeordneten Befestigungsflansch (21, 31, 40, 55), mit dem die Glasscheibe (1) mit Hilfe eines Kleberstranges (10) verklebt ist, und einer Glasscheibe, die entweder mit einem Rahmen aus Kunststoff oder mit einer mit dem Scheibenrand verklebten Profilleiste (4, 20, 28, 34, 46, 52) aus Kunststoff versehen ist, wobei der Rahmen oder die Profilleiste wenigstens einen senkrecht zur Scheibenfläche ausgerichteten Steg (4, 22, 29, 34, 46, 53) aufweisen, **dadurch gekennzeichnet,** daß der Steg (4, 22, 29, 34, 46, 53) des Rahmens oder der Profilleiste entlang dem oberen und/oder dem unteren Rand der Glasscheibe in einem gegebenen gleichbleibenden Abstand zur Flanke (12) des Fensterrahmenfalzes angeordnet ist und eine Stützfläche zum Tragen der in Richtung der Einbauebene verlaufenden Gewichtskomponente der Glasscheibe (1) aufweist, wobei die Stützfläche mit einem im wesentlichen senkrecht zur Einbauebene ausgerichteten Stützelement (7, 17, 30, 38, 47, 54) des oberen und-/oder des unteren Befestigungsflansches (2, 14, 21, 31, 40) formschlüssig zusammenwirkt.

2. Fahrzeugfenster nach Anspruch 1, dadurch gekennzeichnet, daß der senkrecht zur Scheibenfläche ausgerichtete Steg (46, 53) entlang dem unteren Scheibenrand angeordnet ist, und daß das Stützelement für den Steg (46, 53) die obere Kantenfläche (47, 54) des Befestigungsflansches (48, 55) ist.

3. Fahrzeugfenster nach Anspruch 1, dadurch gekennzeichnet, daß der senkrecht zur Scheibenfläche ausgerichtete Steg (4, 29, 34) entlang dem oberen Scheibenrand angeordnet ist, und daß das Stützelement für den Steg (4, 29, 34) durch Verformen des Kantenbereichs (7, 30, 38) des Befestigungsflansches (2, 31, 40) in Richtung auf die Glasscheibe (1) hergestellt ist.

4. Fahrzeugfenster nach Anspruch 1, dadurch gekennzeichnet, daß die Stützelemente für den senkrecht zur Scheibenfläche ausgerichteten Steg (4,22) hakenförmige Halteelemente (17) sind, die an dem betreffenden Befestgigungsflansch (14, 21) befestigt sind.

5. Fahrzeugfenster nach einem der Ansprache 1 bis 4, dadurch gekennzeichnet, daß der senkrecht zur Scheibenfläche ausgerichtete Steg (22) Teil eines Profils (20) ist, das außerdem einen etwa senkrecht zur Scheibenfläche ausgerichteten Steg (23) aufweist, dessen Lage auf der Glasscheibe und dessen Länge (L) so bemessen sind, daß er sich, gegebenenfalls unter elastischer Verformung, auf der Kantenfläche (26) des Befestigungsflansches (21) abstützt.

6. Fahrzeugfenster nach Anspruch 5, dadurch gekennzeichnet, daß die mit der Kantenfläche (26) des Befestigungsflansches (21) zusammenwirkende Fläche des Steges (23) eine Rastnut (25) umfaßt.

7. Fahrzeugfenster nach Anspruch 2 oder 3, dadurch gekennzeichnet, daß der Befestigungsflansch (40) aus parallel nebeneinander angeordneten Blechstreifen besteht, deren Endbereiche (36, 38) unter Bildung einer Klemmnut in Richtung auf die Glasscheibe (1) verformt sind, und daß die so gebildete Klemmnut mit dem verdickten Endbereich (35) des senkrecht ausgerichteten Steges (34) formschlüssig zusammenwirkt.

8. Fahrzeugfenster nach einem oder mehreren der Ansprüche 1 bis 7, dadurch gekennzeichnet, daß das den etwa senkrecht zur Scheibenfläche ausgerichteten Haltesteg (34) umfassende Profil (42) einen zweiten Steg (43) mit einer Nut (44) für die Einlage einer hochreißfesten Trennschnur aufweist.

9. Fahrzeugfenster nach einem oder mehreren der Ansprüche 1 bis 8, dadurch gekennzeichnet, daß der Steg (4, 34, 46) bzw. das den Steg (22, 29, 34, 53) aufweisende Profil (20, 28, 42, 52) durch Extrusion einer viskosen Klebermasse unmittelbar auf der Glasoberfläche hergestellt sind, wobei der Extruderkopf entsprechend einem durch die geometrischen Abmessungen des Fensterrahmens der Autokarosserie vorgegebenen Wegprogramm über die Glasscheibe geführt wird.

**Claims**

1. Vehicle window having a peripheral metallic supporting sheet (21, 31, 40, 55) parallel to the glazed structure (1) and to which the latter is bonded with the aid of an adhesive strip (10) and a glazed structure equipped either with a plastic frame or a plastic section (4, 20, 28, 34, 46, 52) bonded to its periphery, the frame or section being provided with at least one flange (4, 22, 29, 34, 46, 53) perpendicular to the surface of the glazed structure, characterized in that the flange (4, 22, 29, 34, 46, 53) of the frame or section is placed along the upper and/or lower edge of the glazed structure at a given constant distance from the edge (12) of the recess of the opening and in that it has a bearing surface for supporting the component of the weight of the glazed structure (1) directed in the plane of the opening, said bearing surface cooperating with the bearing element (7, 17, 30, 38, 47, 54) of the upper and/or lower supporting sheet (2, 14, 21, 31, 40) directed substantially perpendicular to the plane of the opening, so as to form an assembly.

2. Vehicle window according to claim 1, characterized in that the flange (46, 53) directed perpendicular to the surface of the glazed structure is positioned along the lower edge thereof and in that the bearing element for the flange (46, 53) is the upper end (47, 54) of the supporting sheet (48, 55).

3. Vehicle window according to claim 1, characterized in that the flange (4, 29, 34) directed perpendicular to the surface of the glazed structure is positioned along its upper edge and in that the bearing element for the flange (4, 29, 34) is produced by deforming the end (7, 30, 38) of the supporting sheet (2, 31, 40) oriented in the direction of the glazed structure (1).

4. Vehicle window according to claim 1, characterized in that the bearing elements for the flange (4, 22) directed perpendicular to the surface of the glazed structure are shaped like a hook (17) and are fixed to the supporting sheets (14, 21).

5. Vehicle window according to one of the claims 1 to 4, characterized in that the flange (22) directed perpendicular to the surface of the glazed structure constitutes one of the elements of a section (20), which also has a flange (23) substantially perpendicular to the surface of the glazed structure, whose position on the latter and length (L) are defined in such a way that it bears, optionally by elastic deformation, on the edge (26) of the supporting sheet (21).

6. Vehicle window according to claim 5, characterized in that the surface of the flange (23) cooperating with the edge (26) of the supporting sheet (20) has a groove (25).

7. Vehicle window according to claims 2 or 3, characterized in that the supporting sheet (40) is constituted by two unitary, juxtaposed sheets, whose ends (36, 38) deformed in the direction of the glazed structure (1) thus constitute a channel, which cooperates with the reinforcement (35) of the flange (34) directed perpendicular to the glazed structure in order to form a mechanical assembly.

8. Vehicle window according to one or more of the claims 1 to 7, characterized in that the section (42) having a flange (34) substantially perpendicular to the surface of the glazed structure also has a second flange (43) equipped with a groove (44) serving to receive a high tensile strength cord.

9. Vehicle window according to one or more of the claims 1 to 8, characterized in that the flange (4, 34, 46) or the section (20, 28, 42, 52) having a flange (22, 29, 34, 53) are obtained by extruding a viscous adhesive mass directly onto the surface of the glass, the extrusion head being guided on the glazed structure in accordance with a program dependent on the geometrical dimensions of the vehicle body opening.

FIG. 1

FIG. 2

8

FIG. 3

FIG. 4

FIG. 5

FIG. 6

FIG. 7

FIG. 8